(19) 

Europäisches
Patentamt
European
Patent Office
Office européen
des brevets

(11) **EP 3 373 211 A1**

(12) **EUROPEAN PATENT APPLICATION**

(43) Date of publication:
**12.09.2018 Bulletin 2018/37**

(51) Int Cl.:
**G06Q 10/00** *(2012.01)*    **G06Q 10/06** *(2012.01)*
**G05B 19/418** *(2006.01)*

(21) Application number: **18151813.5**

(22) Date of filing: **16.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **09.03.2017   JP 2017044651**

(71) Applicant: **OMRON Corporation
Shiokoji-dori, Shimogyo-ku
Kyoto-shi
Kyoto 600-8530 (JP)**

(72) Inventors:
• **MIOKI, Takamasa
Kyoto, 600-8530 (JP)**
• **MIZOGUCHI, Kenji
Kyoto, 600-8530 (JP)**

(74) Representative: **2K Patentanwälte Blasberg
Kewitz & Reichel
Partnerschaft mbB
Schumannstrasse 27
60325 Frankfurt am Main (DE)**

(54) **MANAGEMENT DEVICE AND NON-TRANSITORY COMPUTER-READABLE MEDIUM**

(57)    A management device (100) for managing the manufacturing line includes: a feature quantity acquisition unit (21) acquiring, from apparatus information (33) representing states of apparatuses included in the manufacturing line, feature quantities (27) included in the apparatus information (33); a feature quantity evaluation unit (22)comparing the acquired feature quantities (27) with feature quantities included in apparatus information (33) representing basic states of the apparatuses and determining states of the apparatuses; a completion acquisition unit (30) acquiring completion information (31) representing a completed state of the target (W); and an evaluation unit comparing a value obtained by applying a weight based on the completion information (31) to the output of the feature quantity evaluation unit (22) with a threshold value and evaluating the state of the manufacturing line based on the comparison result.

FIG. 4

**Description**

**BACKGROUND**

Technical Field

The disclosure relates to a management device and a management program, and particularly, to a management device and a non-transitory computer-readable medium for managing a manufacturing line of a target (workpiece).

Description of Related Art

In a manufacturing line of workpieces (products and the like), tests are performed on the basis of vibration or sound generated from apparatuses included in the manufacturing line in order to improve yield. Conventionally, such tests are performed on the basis of sensory evaluation according to operation of an inspector listening to sound of the vibration or touching the apparatuses. Accordingly, it is difficult to quantize criteria and to indicate logical validity. Therefore, in Patent Document 1 (Japanese Unexamined Patent Application Publication No. 2004-164635), for example, data is collected from a position sensor, a pressure sensor, a temperature sensor and the like installed in relation to machines used for production of products and the collected data is used for selection of good and bad products and feedback control of the machines.

Patent Documents

[Patent Document 1] Japanese Unexamined Patent Application Publication No. 2004-164635

**SUMMARY**

Recently, when states of apparatuses included in a manufacturing line are monitored and generation of an indication of a failure or a fault is handled (reported and recorded), there is a need for functions for predictive maintenance in consideration of states of products. In this regard, Patent Document 1 performs selection of good and bad products or feedback control of machines on the basis of information detected (sensed) from the machines and thus is likely to report abnormality of the manufacturing line regardless of states of products and has difficulty responding to the aforementioned need.
An object of disclosure is to provide a management device and a non-transitory computer-readable medium for managing a manufacturing line on the basis of apparatus information indicating states of apparatuses included in a manufacturing line of a target and information indicating a completed state of the target.
A management device according to an aspect of the disclosure is a management device which manages a manufacturing line used to manufacture a target, including: a feature quantity acquisition unit which acquires, from apparatus information representing states of apparatuses included in the manufacturing line, feature quantities included in the apparatus information; a feature quantity evaluation unit which compares the acquired feature quantities with feature quantities included in apparatus information representing basic states of the apparatuses and determines states of the apparatuses; a completion acquisition unit which acquires completion information representing a completed state of the target; and an evaluation unit which compares a value obtained by applying a weight based on the completion information to the output of the feature quantity evaluation unit with a threshold value and evaluates the state of the manufacturing line on the basis of the comparison result.
Preferably, the completion information indicates whether the target satisfies a predetermined quality.
Preferably, the completion acquisition unit compares the feature quantities acquired by the feature quantity acquisition unit when the manufacturing line is operated with a plurality of previously leaned feature quantities for a plurality of qualities of the target and determines the completion information on the basis of comparison results.
Preferably, the management device further includes a failure rate acquisition unit which acquires failure rate information indicating a possibility of failure of the apparatuses or defects in a material of the target, and the weight is based on the completion information and the failure rate information.
Preferably, the failure rate acquisition unit compares the feature quantities acquired by the feature quantity acquisition unit when the manufacturing line is operated with a plurality of previously leaned feature quantities for a plurality of factors of failure and determines the failure rate information on the basis of comparison results.
Preferably, the management device reports notification of the possibility of failure in different modes for each factor of failure.
A non-transitory computer-readable medium according to another aspect of the disclosure stores a program which causes a computer to execute a method of managing a manufacturing line used to manufacture a target.

A management method includes: a step of acquiring, from apparatus information representing states of apparatuses included in the manufacturing line, feature quantities included in the apparatus information; a step of comparing the acquired feature quantities with feature quantities included in apparatus information representing basic states of the apparatuses and determining states of the apparatuses; a step of acquiring completion information representing a completed state of the target; and a step of comparing a value obtained by applying a weight based on the completion information to the output of the feature quantity evaluation unit with a threshold value and evaluating the state of the manufacturing line on the basis of the comparison result.

According to the present disclosure, it is possible to manage a manufacturing line using a result obtained by applying apparatus information indicating states of apparatuses included in a manufacturing line of a target to information indicating a completed state of the target as a weight.

## BRIEF DESCRIPTION OF THE DRAWINGS

FIG. 1 is a diagram schematically illustrating the overall configuration of a system 1 according to embodiments.
FIG. 2 is a diagram schematically illustrating a configuration of a unit 200 of FIG. 1.
FIG. 3 is a diagram schematically illustrating a hardware configuration of a PLC 100.
FIG. 4 is a diagram schematically illustrating a configuration of a predictive maintenance function of the PLC 100 according to embodiments.
FIG. 5 is a diagram for describing a process of acquiring a feature quantity 27 from raw data 26 according to embodiments.
FIG. 6 is a diagram for describing a process of acquiring a feature quantity 27 from raw data 26 according to embodiments.
FIG. 7 is a schematic flowchart of a process according to embodiments.
FIG. 8 is a flowchart illustrating the process of step S11 in detail.
FIG. 9 is a diagram illustrating an overview of a completion acquisition unit 30 according to embodiments in association with a manufacturing line of workpieces W.
FIG. 10 is a flowchart of processing a "learning mode" related to the completion acquisition unit 30 according to embodiments.
FIG. 11 is a diagram for describing a method of determining an effective pattern EP and a threshold value Th1 according to embodiments.
FIG. 12 is a flowchart of processing a "management mode" related to the completion acquisition unit 30 according to embodiments.
FIG. 13 is a flowchart describing an overview of a failure prediction process according to embodiments.
FIG. 14 is a schematic flowchart illustrating a modified example of the failure prediction process according to embodiments.
FIG. 15 is a diagram for describing clustering of FIG. 14.
FIG. 16 is a diagram illustrating an association table according to embodiments.
FIG. 17 is a diagram illustrating an importance level table according to embodiments.

## DESCRIPTION OF THE EMBODIMENTS

Hereinafter, embodiments will be described with reference to the drawings. In the following description, the same signs are attached to the same parts and components. Such parts and components also have the same names and same functions. Accordingly, detailed description thereof will not be repeated.

(System configuration)

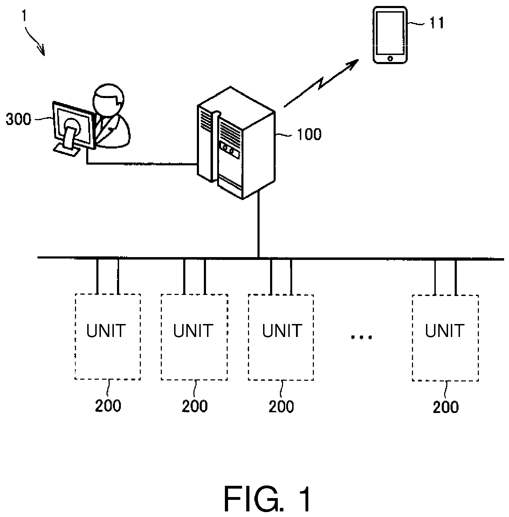

FIG. 1 is a diagram schematically illustrating the overall configuration of a system 1 according to embodiments. The system 1 includes a plurality of units 200, a control computer such as a programmable logic controller (PLC) 100 which is an embodiment of a "management device," and a computer 300 operated by an administrator in a manufacturing line using factory automation (FA) or the like for manufacturing a target (hereinafter, also referred to as a workpiece W). These components communicate with each other in a wired or wireless manner. In addition, the PLC 100 or the computer 300 can communicate with a terminal 11 carried by an operator or the administrator.

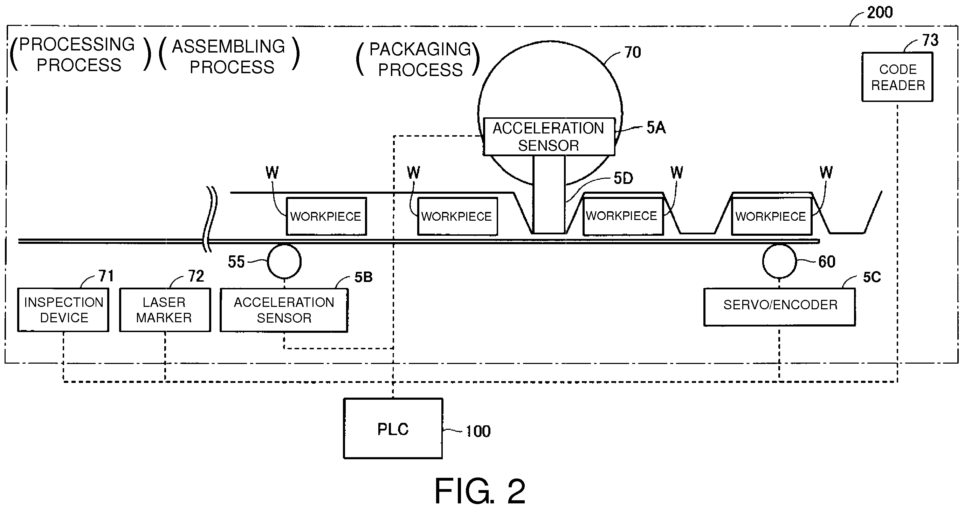

FIG. 2 is a diagram schematically illustrating a configuration of the units 200 of FIG. 1. The units 200 have the same configuration. For example, the unit 200 includes apparatuses included in a process of processing parts, a process of assembling parts, and a process of packaging assembled workpieces W of the manufacturing line. Specifically, the unit 200 includes an inspection device 71 which inspects workpieces W, parts, materials and the like by photographing the workpieces W, parts, materials and the like and performing image processing, a laser marker 72 which attaches identification codes (identifiers) to the workpieces W or the parts, and a code reader 73 which reads identification codes of workpieces W or parts.

In addition, the unit 200 includes an upstream roller 55 and a downstream servo motor 60 related to a conveyer of parts or workpieces W, and a packaging apparatus (packaging machine) 70 for cutting packaging materials and packaging workpieces W in the packaging process. The packaging apparatus 70 includes an arm 5D connected to a cutter which cuts packaging materials. The arm 5D reciprocates by interlocking with rotation of an inner motor (not shown) of the packaging apparatus 70 so that packaging materials are cut by the cutter.

Furthermore, the unit 200 includes an acceleration sensor 5B which measures acceleration of rotation of the roller 55, a servo/encoder 5C which measures the rotation amount (direction, rotation speed, and the like) of the servo motor 60, and an acceleration sensor 5A which measures acceleration related to the reciprocating action of the arm 5D.

The PLC 100 transmits control data to each component of each unit 200 to control each component. In addition, the PLC 100 collects apparatus information indicating states of apparatuses included in the manufacturing line and processes the collected apparatus information. Further, the PLC 100 generates control data on the basis of the processing results and controls each component using the generated control data.

In embodiments, the aforementioned apparatus information includes measurement information from each of the aforementioned sensors, and information from the inspection device 71 (information on inspection of workpieces W or parts), information of the inspection device 71 (properties such as the period and place of use, resolution of the device, etc.).

Meanwhile, apparatuses and sensors included in the manufacturing line are not limited to the types illustrated in FIG. 2. For example, a temperature sensor for detecting heat radiation of apparatuses, a sound sensor for detecting vibration sound, and the like may be included.

(Hardware configuration of PLC 100)

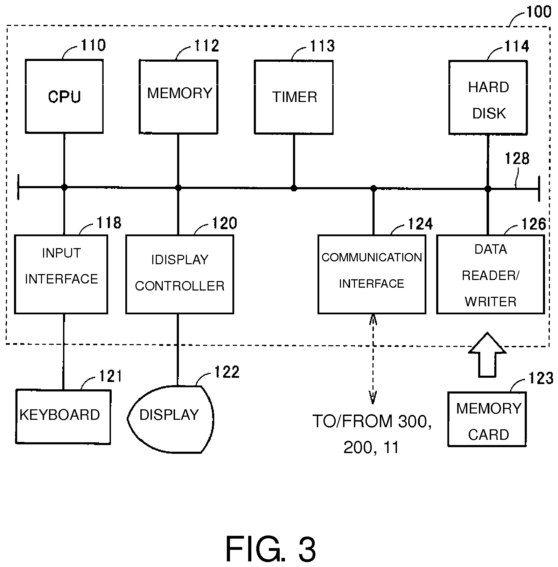

FIG. 3 is a diagram schematically illustrating a hardware configuration of the PLC 100. Referring to FIG. 3, the PLC includes a central processing unit (CPU) 110 which is an operation processing unit, a memory 112 and a hard disk 114 as a storage unit, a timer 113 which measures time and outputs measured time data to the CPU 110, an input interface 118, a display controller 120 which controls a display 122, a communication interface 124, and a data reader/writer 126. These components are connected via a bus 128 such that they can perform data communication.

The CPU 110 performs various operations by executing programs (code) stored in the hard disk 114. The memory 112 is typically a storage device such as a dynamic random access memory (DRAM) and stores various types of data and information including apparatus information 33 in addition to programs and data read from the hard disk 114.

The input interface 118 mediates data transmission between the CPU 110 and input devices such as a keyboard 121, a mouse (not shown) and a touch panel (not shown). That is, the input interface 118 receives an operation command applied by a user operating an input device.

The communication interface 124 mediates data transmission between the PLC 100 and each part of the unit 200, the computer 300 or the terminal 11. The data reader/writer 126 mediates data transmission between the CPU 110 and a memory card 123 which is a recording medium.

(Functional configuration of PLC 100)

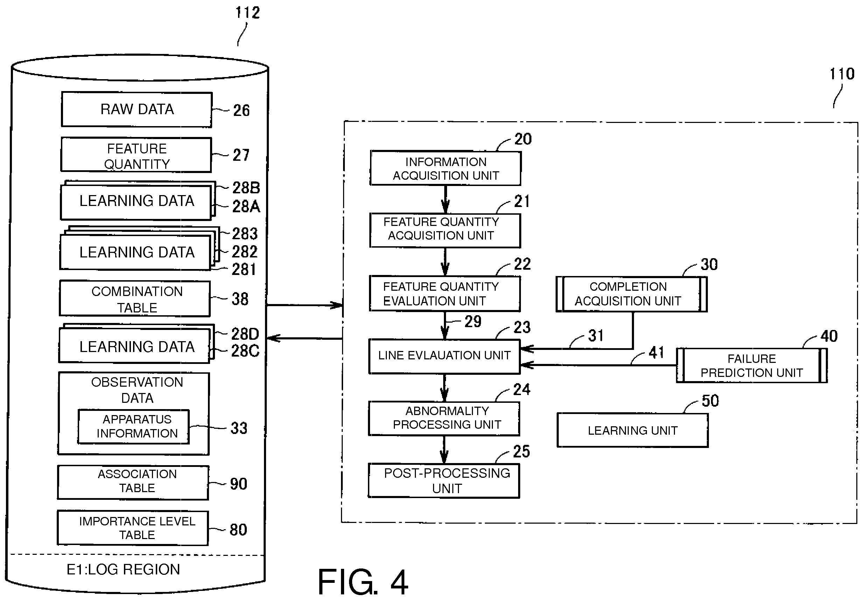

FIG. 4 is a diagram schematically illustrating a configuration of a predictive maintenance function of the PLC 100 according to embodiments. In embodiments, the predictive maintenance function of the manufacturing line is implemented in a control program for controlling the entire manufacturing line, which is included in the PLC 100. The implementation form is not limited to this embodiment. Although each unit of FIG. 4 is represented as a program executed by the CPU 110, each unit may also be realized according to a combination of a program and a circuit.

Referring to FIG. 4, the CPU 110 includes an information acquisition unit 20 which stores the apparatus information 33 from each apparatus of the manufacturing line, which is received from the unit 200 through the communication interface 124, in the memory 112, a feature quantity acquisition unit 21 which acquires feature quantities of apparatus information, a learning unit 50 which performs machine learning, a feature quantity evaluation unit 22 which evaluates the feature quantities acquired by the feature quantity acquisition unit 21, a line evaluation unit 23 which evaluates the output of the feature quantity evaluation unit 22 on the basis of outputs of a completion acquisition unit 30 and a failure prediction unit 40 which will be described below, and an abnormality processing unit 24 and a post-processing unit 25 which perform abnormality processing based on the evaluation result of the line evaluation unit 23.

The feature quantity acquisition unit 21 extracts time series raw data 26 from the apparatus information 33 and stores the raw data 26 in the memory 112. In addition, the feature quantity acquisition unit 21 acquires feature quantities 27 of the raw data 26 and stores the feature quantities 27 in the memory 112. A method of acquiring feature quantities will be described below.

The feature quantity evaluation unit 22 compares the feature quantities 27 with feature quantities acquired according to machine learning using an abnormality degree evaluation algorithm, determines states of the apparatuses included in the manufacturing line on the basis of the comparison results and outputs an abnormality degree evaluation value 29 as the determination result.

The completion acquisition unit 30 evaluates completed states of workpieces W as products using the feature quantities 27 acquired from the apparatus information 33 and acquires completion information 31 indicating completed states to serve as evaluation results.

The failure prediction unit 40 is an embodiment of a "failure rate acquisition unit." The failure prediction unit 40 acquires failure rate information 41 indicating a possibility of failure of apparatuses included in the manufacturing line or a possibility of defects in materials of a target using the apparatus information 33.

The line evaluation unit 23 evaluates the state of the manufacturing line on the basis of the abnormality degree evaluation value 29 from the feature quantity evaluation unit 22. Alternatively, the line evaluation unit 23 applies, to the abnormality degree evaluation value 29, a weight based on the completion information 31 from the completion acquisition unit 30 or based on the failure rate information 41 from the failure prediction unit 40 and evaluates the state of the manufacturing line on the basis of the weighting result. In addition, the line evaluation unit 23 determines information related to predictive maintenance according to the evaluation result.

The abnormality processing unit 24 performs predetermined abnormality processing according to the information about predictive maintenance determined by the line evaluation unit 23. The post-processing unit 25 stores the evaluation result and the like in a log region E1 of the memory 112 for post-analysis and output.

(Feature quantity acquisition process)

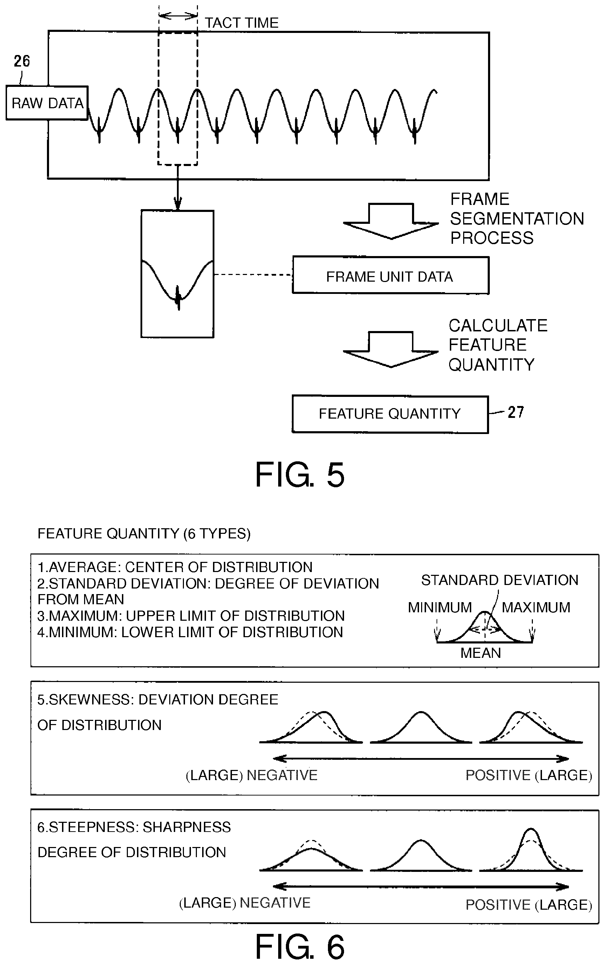

FIGS. 5 and 6 are diagrams for describing a process of acquiring the feature quantities 27 from the raw data 26 according to embodiments. The raw data 26 which is subjected to feature quantification is data updated at each control cycle derived from the apparatus information 33 received by the PLC 100 from each apparatus of the manufacturing line. In FIG. 5, the raw data 26 represents signal waveforms measured by various sensors.

The feature quantity acquisition unit 21 performs a frame segmentation process on the raw data 26 to derive frame unit data obtained by dividing the raw data into predetermined time frames. Meanwhile, a time frame is not limited to a predetermined duration and may be variable.

The feature quantity acquisition unit 21 extracts a plurality of feature quantities 27 from each piece of frame unit data acquired in a time series according to a predetermined procedure.

The time interval of a frame corresponds to a time cycle at which "control data of an apparatus corresponding to a predictive maintenance target indicates fixed periodicity in a normal operation state." For example, in the case of the packaging apparatus 70, the time interval corresponds to a time width depending on tact time such as an operation cycle of the arm 5D of the cutter which cuts packaging materials.

FIG. 6 illustrates the feature quantities 27 acquired by the feature quantity acquisition unit 21. For example, with respect to the amplitudes of waveforms indicated by the raw data 26 of each piece of frame unit data, six types of feature quantities 27 indicating values of the mean, standard deviation, skewness, maximum, and minimum of FIGS. 6 and steepness of FIG. 6 are acquired.

(Overview of predictive maintenance process)

In embodiments, operation modes of the PLC 100 include a learning mode for generating learning data and an operating mode for operating the manufacturing line. In the operating mode, a process for predictive maintenance using the learning data is performed.

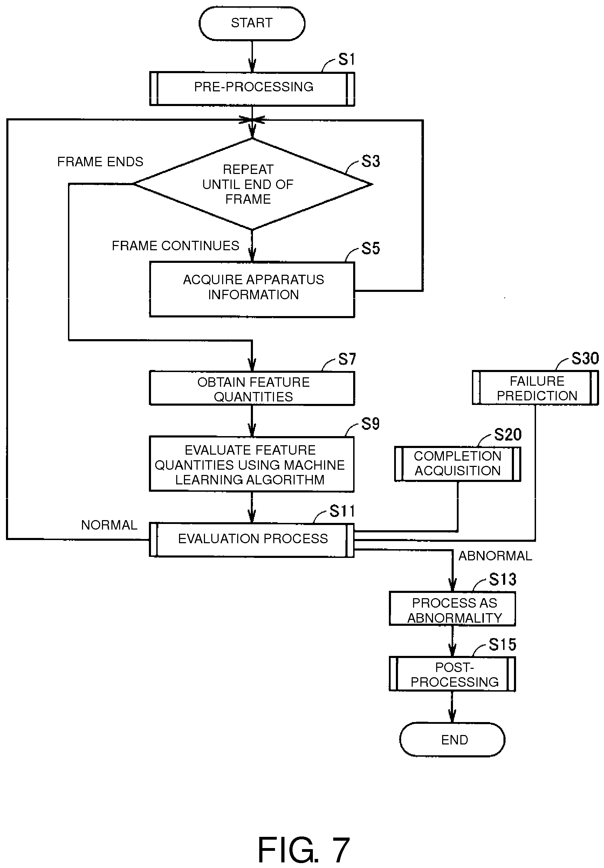

FIG. 7 is a schematic flowchart of a process according to embodiments. Referring to FIG. 7, first, the learning unit 50 performs pre-processing in the learning mode (step S1). In the pre-processing, the learning unit 50 generates learning data 28A and stores the learning data 28A in the memory 112. The learning data 28A represents feature quantities acquired from the apparatus information 33 of apparatuses which are in basic (e.g., normal) states and are included in the manufacturing line. The learning data 28A is generated using a data mining tool which is not shown.

The PLC 100 switches the operation mode from the learning mode into the operating mode. The information acquisition unit 20 acquires the apparatus information 33 from the manufacturing line (step S3 and step S5). Specifically, with respect to each frame time, the information acquisition unit 20 acquires the apparatus information 33 as long as the corresponding frame time continues ("frame continues" in step S3 and step S5). When the corresponding frame time expires ("frame ends" in step S3), the feature quantity acquisition unit 21 acquires the raw data 26 corresponding to unit data of frame time from the apparatus information 33 and acquires the aforementioned six types of feature quantities 27 from the raw data 26 (step S7).

The feature quantity evaluation unit 22 uses a local outlier factor (LOF), for example, as an abnormality degree evaluation algorithm. The feature quantity evaluation unit 22 outputs abnormality degree evaluation values 29 indicating results of determination of the states of the apparatuses on the basis of the feature quantities 27 acquired in step S7 using the LOF algorithm (step S9). Specifically, the feature quantity evaluation unit 22 specifies a 6-dimensional space defined by the aforementioned six types of feature quantities 27. When a group of six feature quantities of the learning data 28A and the six feature quantities 27 acquired in step S7 are distributed in this space, the feature quantity evaluation unit 22 calculates distances (e.g., Euclidean distances) between the feature quantity group of the learning data 28A and the six feature quantities 27 acquired in step S7 as a score of an evaluation value and outputs the score as an abnormality degree evaluation value 29 corresponding to a result of determination of a state of an apparatus.

For example, the feature quantity evaluation unit 22 can determine that the state of the apparatus is close to the basic (e.g., normal) state when the score (abnormality degree evaluation value 29) is close to 1 and determine that the state of the apparatus is close to an abnormal state that is not the basic state of the apparatus when the score (abnormality degree evaluation value 29) is far from 1. Meanwhile, the abnormality degree evaluation algorithm is not limited to the LOF.

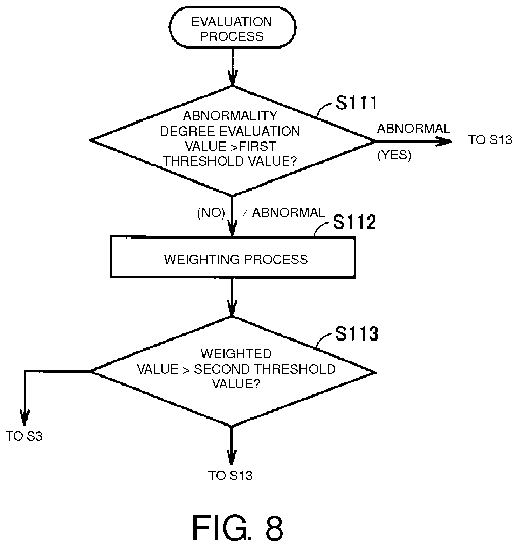

The line evaluation unit 23 determines a normal or abnormal state of the manufacturing line using the abnormality degree evaluation value 29 (step S11). FIG. 8 is a flowchart illustrating the process of step S11 in detail.

Referring to FIG. 8, when the line evaluation unit 23 determines that the abnormality degree evaluation value 29 exceeds a predetermined first threshold value ("abnormal" in step S11), the abnormality processing unit 24 performs predetermined abnormality processing (step S 13) and the post-processing unit 25 performs post-processing (step S 15). On the other hand, when the line evaluation unit 23 determines that the abnormality degree evaluation value 29 is equal to or less than the first threshold value ("not abnormal" in step S11), the line evaluation unit 23 applies, to the abnormality degree evaluation value 29, a weight based on completion information 31 from completion acquisition (step S20) which will be described below or failure rate information 41 from failure prediction processing (step S30) which will be described below (step S112) and compares the weighted abnormality degree evaluation value 29 with a second threshold value (step S113). When it is determined that the weighted abnormality degree evaluation value 29 is greater than the second threshold value as a result of comparison ("YES" in step S113), the state of the manufacturing line is determined to be normal, and the process returns to step S3. On the other hand, when it is determined that the weighted abnormality degree evaluation value 29 is equal to or less than the second threshold value ("NO" in step S113), the state of the manufacturing line is determined to be abnormal, and the process proceeds to the abnormality processing of step S 13. The aforementioned weighting process will be described below.

(Completion acquisition process)

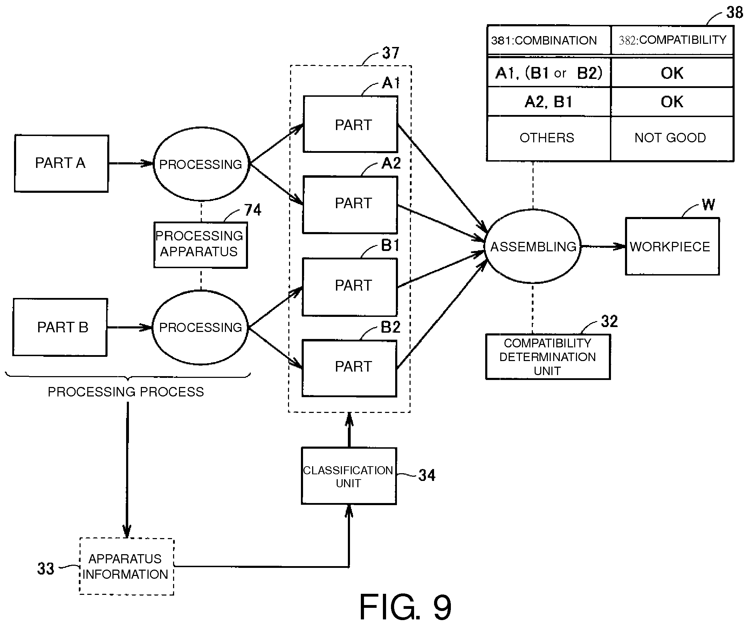

FIG. 9 is a diagram illustrating an overview of the completion acquisition unit 30 according to embodiments in association with the manufacturing line of workpieces W. In the processing process of the manufacturing line, parts A and B are processed using the processing apparatus 74 and the parts which have been processed (hereinafter, also referred to as processed parts) are assembled through the assembling process to complete workpieces W (product). Processed parts are different in size, color and the like due to characteristics of processing apparatuses even though the processed parts have undergone the same processing process, and thus individual differences may be generated among workpieces W. The completion acquisition unit 30 classifies processed parts and workpieces W in consideration of such differences generated in the processing process.

The completion acquisition unit 30 includes a classification unit 34 which classifies processed parts according to learning data 28B and a compatibility determination unit 32 which determines compatibility between processed parts. In embodiments, the operation modes of the PLC 100 include the learning mode for generating the learning data 28B and the operating mode for performing compatibility determination using the generated learning data 28B. In embodiments, "compatibility" indicates whether a combination of processed parts has a predetermined quality as a product (workpiece W).

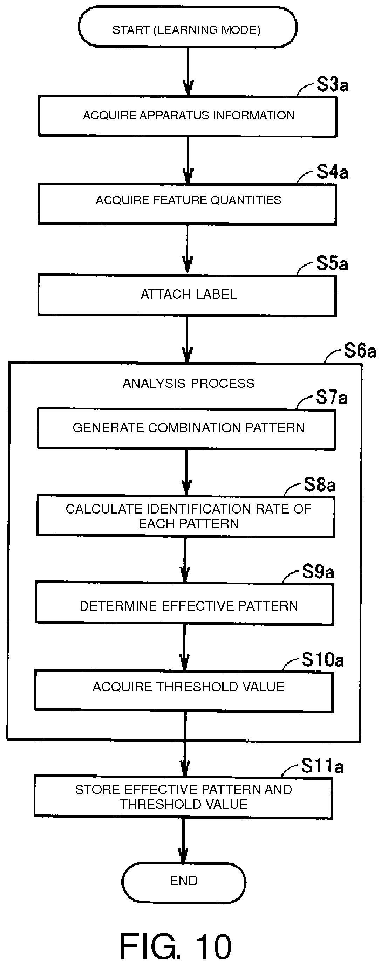

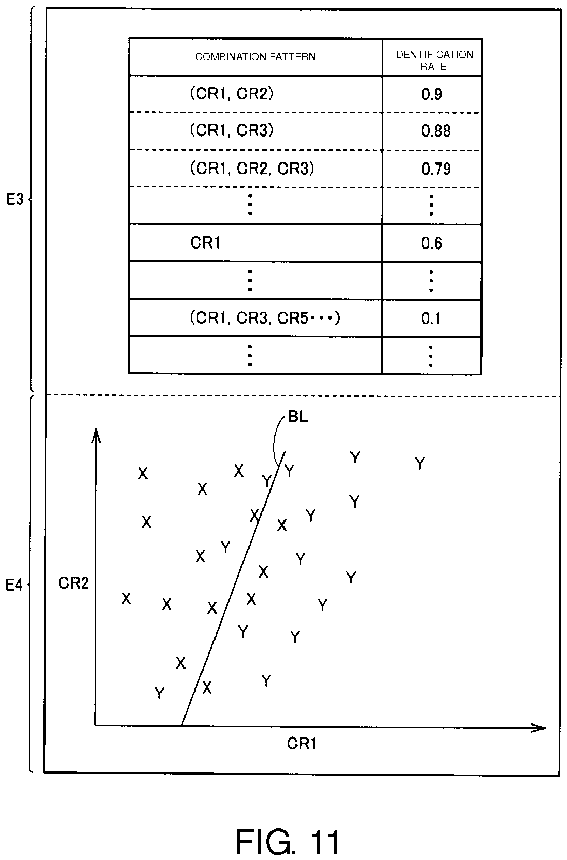

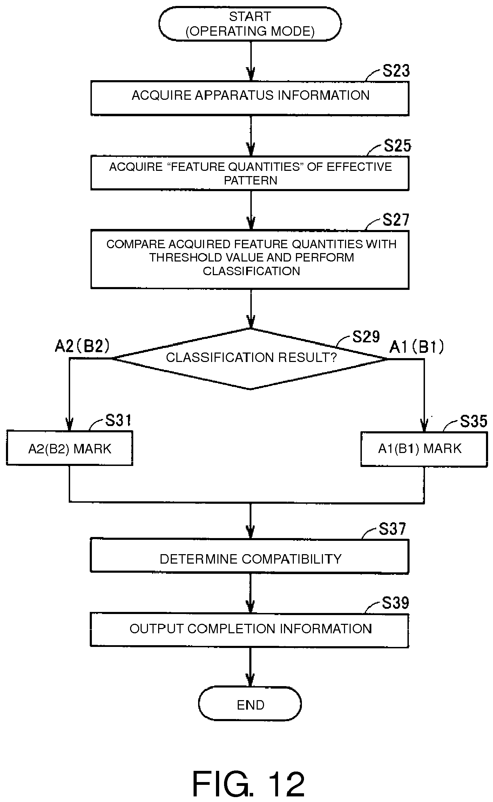

FIG. 10 is a flowchart of processing the "learning mode" related to the completion acquisition unit 30 according to embodiments. FIG. 11 is a diagram for describing a method of determining an effective pattern EP and a threshold value Th1 according to embodiments. FIG. 12 is a flowchart of processing the "operating mode" related to the completion acquisition unit 30 according to embodiments.

Here, the completion acquisition process is performed at a cycle synchronized with the frame. In addition, parts used for assembly are not limited to the two types of parts A and B and may be three or more types.

<Processing of "learning mode">

Referring to FIG. 10, in the "learning mode," the information acquisition unit 20 acquires apparatus information 33 measured by a vibration sensor of the processing apparatus 74 (step S3a) and the feature quantity acquisition unit 21 acquires the aforementioned six types of feature quantities CRi (i = 1, 2, 3, ..., 6) included in the acquired apparatus information 33 (step S4a). The learning unit 50 attaches labels indicating a part type (A or B) to the acquired feature quantities (acquisition feature quantities) CRi and stores the feature quantities in the memory 112 (step S5a). Part types are designated according to operator input. Although a case in which part A is processed is exemplified here, the same process can also be performed on part B.

(Analysis processing (step S6a))

The learning unit 50 performs analysis processing on the information stored in step S5a (step S6a). The analysis processing includes processes (steps S7a, S8a and S9a) for determining an effective pattern EP.

First, the learning unit 50 generates a plurality of patterns of combinations of the acquired feature quantities CRi as illustrated in a region E3 of the memory 112 of FIG. 11 (step S7a) and calculates an identification rate for identifying a degree of processing (i.e., whether workpieces W (products) satisfy predetermined quality) for each pattern (step S8a).

The learning unit 50 calculates the identification rate through an operation according to a known pattern classification method in the region E3 (step S8a). In embodiments, for example, the identification rate of each pattern is calculated according to an identification function of a support vector machine (SVM) (refer to the region E3 of FIG. 11). Meanwhile, calculation of identification rates is not limited to the method according to SVM and may use a calculation method according to a neural network (NN).

The learning unit 50 specifies a pattern corresponding to a maximum identification rate, for example, in identification rates calculated for the respective patterns (refer to the region E3 of FIG. 11) and determines the specified pattern as the effective pattern EP (step S9a). Referring to FIG. 11, since a combination corresponding to the maximum identification rate (= 0.9) is specified as (CR1, CR2), a combination of identification feature quantities CRi of the effective pattern EP is determined as (CR1, CR2) in this case. This effective pattern EP corresponds to a combination pattern of feature quantities through which whether workpieces W (products) satisfy predetermined quality can be identified.

The learning unit 50 acquires a threshold value Th1 on the basis of the combination of the feature quantities CR1 and CR2 indicated by the determined effective pattern EP (step S10a).

Specifically, the learning unit 50 defines a 2-dimensional plane according to the combination (CR1, CR2) of the identification feature quantities CRi of the effective pattern EP in a region E4 of the memory 112. In addition, the combination values (CR1, CR2) of the feature quantities CR1 and CR2 acquired from each processed part in the learning mode are plotted on the defined plane (refer to marks "X" and "Y" in the region E4 of FIG. 11).

The learning unit 50 specifies a boundary line BL which identifies (divides) the plotted region on the 2-dimensional plane of the region E4 on the basis of the distribution state of plotted values. The learning unit 50 determines the threshold value Th1 on the basis of values indicated by the boundary line BL.

The learning unit 50 stores the learning data 28B including the determined effective pattern EP and the acquired threshold value Th1 in the memory 112 (step S11a). Accordingly, processing of the "learning mode" ends.

Meanwhile, it is assumed that a sufficient number of pieces of apparatus information 33 are acquired in step S3a in FIG. 10. In addition, although the 2-dimensional plane is defined in FIG. 11, the dimension of the plane is variable according to the number of identification feature quantities CRi included in the effective pattern EP.

<Processing of "operating mode">

A process when the operation mode is switched to the "operating mode" will be described with reference to FIG. 12. Meanwhile, it is assumed that the learning data 28B having the effective pattern EP and the acquired threshold value Th1 is stored in the memory 112 for each of the part A and the part B when the "operating mode" is started.

First, with respect to processing of the part A, the information acquisition unit 20 acquires apparatus information 33 from the vibration sensor of the processing apparatus 74 (step S23).

The feature quantity acquisition unit 21 acquires feature quantities CRi included in the acquired apparatus information 33. The classification unit 34 acquires feature quantities (identification feature quantities) of the set indicated by the effective pattern EP of the part A indicated by the learning data 28B among the feature quantities CRi (step S25), compares the acquired identification feature quantities with the threshold value Th1 of the learning data 28B, classifies the part A as any one of a processed part A1 and a processed part A2 on the basis of the comparison results and outputs the classification results (step S27).

For example, the part A is classified as the processed part A1 when the comparison results indicate that the identification feature quantities represent values of the left region of the figure on the basis of the boundary line BL of the region E4 (refer to FIG. 11) and classified as the processed part A2 when the identification feature quantities represent values of the right region of the figure. In the processing process for the part B, processed parts can be classified as any one of a processed part B and a processed part B2 according to the same processing.

The PLC 100 controls the laser marker 72 to assign identification codes indicating the classification results of the classification unit 34 to the processed parts (steps S29, S31 and S35). Accordingly, a group of a plurality of processed parts 37 composed of the processed parts A1, A2, B1 and B2 is transferred to the assembling process.

In the assembling process, the compatibility determination unit 32 determines compatibility of combinations of processed parts used for assembling of workpieces W on the basis of a combination table 38 (step S37) and outputs the compatibility as completion information 31 (step S39).

The combination table 38 shown in FIG. 9 is created in advance on the basis of knowledge of the operator and stored in the memory 112. A plurality of combinations 381 of processed parts and compatibility 382 (any one of "OK" indicating predetermined quality and "NG" indicating poor quality (having no predetermined quality)) of processed parts corresponding to each combination 381 are stored in the combination table 38. The compatibility determination unit 32 searches the combination table 38 on the basis of sets of identification codes read by the code reader 73 from processed parts of workpieces W. Compatibility 382 corresponding to a combination 381 matched with a corresponding identification code set is read from the combination table 38 according to search and output as completion information 31.

According to the above-described completion acquisition process, processed parts based on the learning data 28B can be automatically classified on the basis of differences thereof using the apparatus information 33 measured and acquired in the processing process of for parts of workpieces W, and in the following product (workpiece W) assembling process, qualities of products can be classified according to the processed part classification results. Accordingly, it is possible to omit or simplify the inspection process for classification in the processing process and assembling process, which was required in the conventional system, thereby reducing processing time.

(Failure prediction process)

In embodiments, the failure prediction unit 40 predicts the possibility and factors (causes) of failures (or defects or faults) in the manufacturing line. In embodiment, factors include (1) a failure (or defect or fault) of a manufacturing apparatus, (2) defects in materials of workpieces W and (3) a failure (or defect or fault) of the inspection device 71. The manufacturing apparatus corresponding to the factor (1) may include a sensor, the processing apparatus 74, the packaging apparatus 70 and the like included in processes.

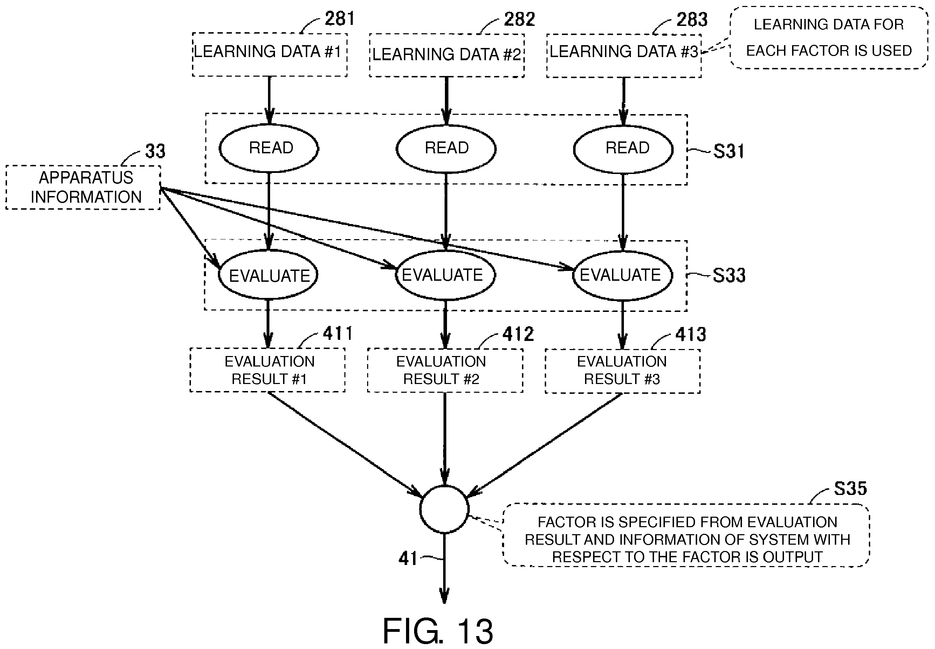

FIG. 13 is a flowchart describing an overview of the failure prediction process according to embodiments. Referring to FIG. 13, in the "learning mode," the learning unit 50 respectively generates learning data 281 to 283 in advance with respect to the aforementioned factors (1) to (3) using a data mining tool which is not shown and stores the generated learning data in the memory 112. The learning data 281 to the learning data 283 represent feature quantities 27 acquired from the apparatus information 33 in a state in which the manufacturing line has the factor (1) corresponding to a failure (or defect) of a manufacturing apparatus, a state in which the manufacturing line has the factor (2) corresponding to defects in materials of workpieces W, and a state in which the manufacturing line has the factor (3) corresponding to a failure (defect) of the inspection device 71, respectively.

In the "operating mode," the failure prediction unit 40 reads the learning data 281 to 283 from the memory 112 (step S31). The information acquisition unit 20 acquires the apparatus information 33 from the manufacturing line which is being operated and the feature quantity acquisition unit 21 acquires the aforementioned feature quantities 27 from the raw data 26 of the apparatus information 33.

The failure prediction unit 40 evaluates the acquired feature quantities using the learning data 281 to 283 by means of the LOF algorithm and outputs failure rate information 41 based on evaluation values 411, 412 and 413 (step S33). Specifically, in a case of evaluation using the learning data 281, the failure prediction unit 40 assumes a 6-dimensional space defined by six types of feature quantities 27 according to the aforementioned LOF algorithm, obtains distances between a group of feature quantities of the learning data 281 and the six types of feature quantities 27 acquired by the feature quantity acquisition unit 21 in the space, calculates the distances as a score of an evaluation value, and outputs the score as the evaluation value 411. In the same manner, scores are calculated using the corresponding learning data 282 and 283 according to the LOF algorithm and output as evaluation values 412 and 413 for other factors as well.

For example, the manufacturing line can be predicted to be close to a failure (defect) state due to the factor corresponding to a failure (or defect) of a manufacturing apparatus when the score of the evaluation value 411 is close to 1 and can be predicted to be in a state in which the factor corresponding to a failure (or defect) of a manufacturing apparatus is not generated when the score is far from 1. In the same manner, the manufacturing line can be predicted to be close to a failure (defect) state due to the factor corresponding to defects in materials of the workpieces W when the score of the evaluation value 412 is close to 1 and can be predicted to be in a state in which the factor corresponding to poor quality of materials of workpieces W is not generated when the score is far from 1. Similarly, the manufacturing line can be predicted to be close to a failure state (defect) due to the factor corresponding to a failure (or defect) of the inspection device 71 when the score of the evaluation value 413 is close to 1, and can be predicted to be in a state in which the factor corresponding to a failure (or defect) of the inspection device 71 is not generated when the score is far from 1.

The failure prediction unit 40 searches an association table 90 of the memory 112 on the basis of the evaluation values 411 to 413 and outputs the factor of the failure (defect) predicted with respect to the manufacturing line to the display 122 or the like (step S35). Factors of failures (or defects) are stored in the association table 90 corresponding to the evaluation values 411 to 413 according to knowledge of the operator. The failure prediction unit 40 reads and outputs the factor corresponding to the evaluation value 411 (e.g., a "failure of a servo motor") when the score of the evaluation value 411 is close to 1. In the same manner, the failure prediction unit 40 reads and outputs the factor corresponding to the evaluation value 412 (e.g., "defects in a material") when the score of the evaluation value 412 is close to 1. In the same manner, the failure prediction unit 40 reads and outputs the factor corresponding to the evaluation value 413 (e.g., a "failure of the inspection device") when the score of the evaluation value 413 is close to 1.

(Weighting process)

In the weighting process (step S112) of FIG. 8, "1" is allocated to "OK" and "0" is allocated to "NG," for example, with respect to the completion information 31 from the completion acquisition unit 30, and a weight WT is calculated as follows, for example.

$$\text{Weight WT} = \text{(value of completion information 31) or weight WT} = \text{((value of completion information 31)} + \text{sum of scores of evaluation values 411 to 413)}$$

The line evaluation unit 23 weights the abnormality degree evaluation value 29 by adding the weight WT thereto. By using the weighted abnormality degree evaluation value 29, when a workpiece W is not determined to be a good product or any failure (defect) due to the factors (1) to (3) or the like is predicted to be generated in the manufacturing line, notification of the presence of abnormality possibility of the manufacturing line can be output and the accuracy of predictive maintenance of the manufacturing line can be improved even when the abnormality degree evaluation value 29 indicates a normal value.

In addition, information on the factor of abnormality possibility and a system with respect to the factor (for each of the manufacturing apparatus, material and inspection device) or information about predictive maintenance by which a user deals with the factor may be output along with the notification.

(Modified example of failure prediction process)

Although the failure prediction process is performed using the learning data 281 to 283 for each factor of failure (defect) in the failure prediction process of FIG. 13, the failure prediction process is performed using learning data 28C which is not associated with factors in a modified example.

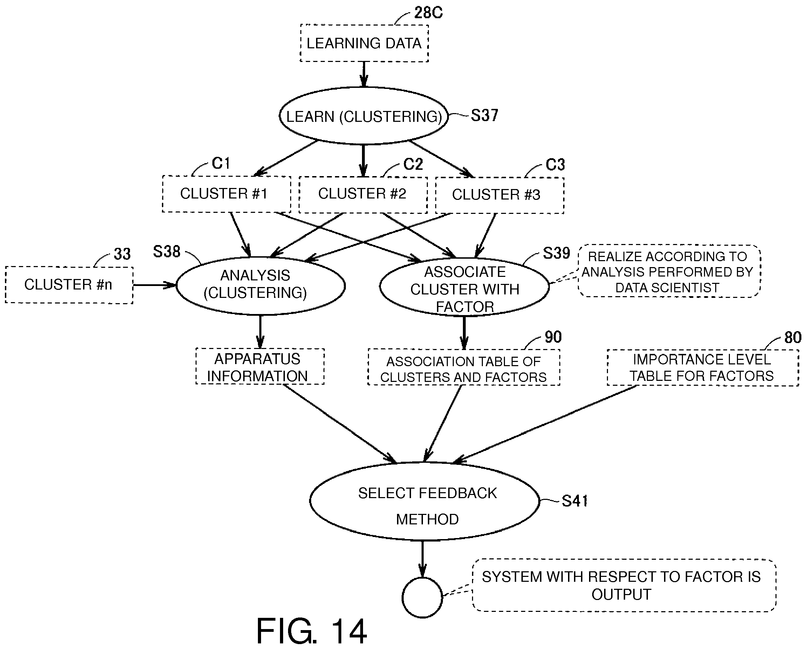

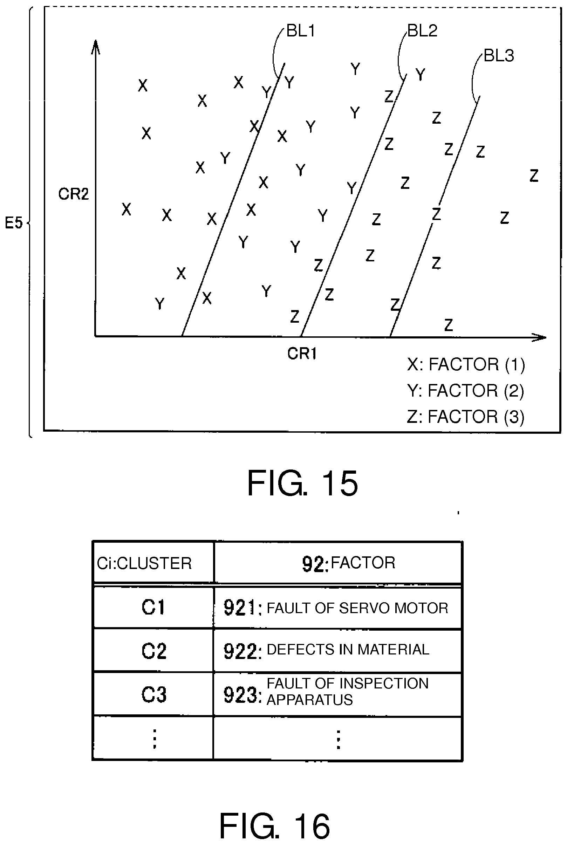

FIG. 14 is a schematic flowchart illustrating a modified example of the failure prediction process according to embodiments. FIG. 15 is a diagram describing clustering of FIG. 14. In FIG. 14, division (classification) according to clustering performed by the learning unit 50 is acquired in the "learning mode" of the PLC 100 and the failure prediction unit 40 clusters (classifies) feature quantities included in the acquired apparatus information 33 into any one of divisions to associate the feature quantities with factors and outputs the associated feature quantities and factors in the "operating mode."

(Processing flowchart)

Processing of the "learning mode" and the "operating mode" according to the modified example of the failure prediction process performed by the PLC 100 will be described.

<Processing of "learning mode">

Referring to FIG. 14, the learning unit 50 performs clustering on the basis of the learning data 28C in the "learning mode" (step S37). This clustering procedure is the same as the procedure described in FIGS. 10 and 11 and thus will be briefly described.

First, in the "learning mode," apparatus information 33 is acquired by the information acquisition unit 20 and the feature quantity acquisition unit 21 and feature quantities 27 (feature quantities CRi) included therein are acquired. The learning unit 50 calculates an identification rate of factor identification from the feature quantities CRi for each combination pattern of the feature quantities CRi according to the aforementioned SVM identification function in order to identify a factor. A pattern corresponding to, for example, a maximum identification rate, in the calculated identification rates is determined as an effective pattern EP. The effective pattern EP corresponds to a combination pattern of feature quantities through which a factor can be identified.

The learning unit 50 acquires threshold values Th1, Th2 and Th3 on the basis of the determined effective pattern EP (e.g., a combination of feature quantities CR1 and CR2). Specifically, combination values (CR1, CR2) of acquired feature quantities CR1 and CR2 from the apparatus information 33 corresponding to a failure (defect) of a manufacturing apparatus are plotted (refer to mark "X" of a region E5 of FIG. 15) on a virtual 2-dimensional plane according to the combination (CR1, CR2) of the identification feature quantities CRi of the effective pattern EP, combination values (CR1, CR2) of feature quantities CR1 and CR2 from the apparatus information 33 corresponding to defects in a material are plotted (refer to mark "Y" of a region E5 of FIG. 15) on the plane, and combination values (CR1, CR2) of feature quantities CR1 and CR2 corresponding to a failure (defect) of the inspection device are plotted (refer to mark "Z" of a region E5 of FIG. 15) on the plane.

Accordingly, the learning unit 50 displays a distribution state of plotted values of each factor on the 2-dimensional plane of the region E5 on the display 122. A user (data scientist) designates boundary lines BL1, BL2 and BL3 which divide regions in which the combination values (CR1, CR2) are plotted on the basis of the displayed distribution states by manipulating the keyboard 121 according to their knowledge and inputs information in which each division segmented by the boundary lines BL1, BL2 and BL3 is associated with a factor (step S39).

The learning unit 50 determines the threshold values Th1, Th2 and Th3 on the basis of values indicated by the boundary lines BL1, BL2 and BL3 designated by the user, creates the association table 90 of clusters and factors and stores such data in the memory 112 (step S39). Referring to FIG. 16, factors 92 of failures (defects) of the manufacturing line are registered corresponding to clusters C1 to C3 in the association table 90.

With respect to determination of the threshold values in step S39, for example, the user determines the threshold value Th1 for determining the "failure (defects) of the manufacturing apparatus" as combination values (CR1, CR2) near the boundary line BL1, determines the threshold value Th2 for determining "defects in a material" as combination values (CR1, CR2) near the boundary line BL2 and determines the threshold value Th3 for determining the "failure of the inspection device" as combination values (CR1, CR2) near the boundary line BL3 according to knowledge. The learning unit 50 stores the effective pattern EP and the determined threshold values Th1, Th2 and Th3 in the memory 112 as learning data 28D. Accordingly, processing of the "learning mode" is ended.

<Processing of "operating mode">

Processing of the "operating mode" will be described with reference to FIG. 14. Meanwhile, the learning data 28D (the effective pattern EP and the threshold values Th1, Th2 and Th3) is stored in the memory 112 when the "operating mode" is started.

First, the failure prediction unit 40 acquires a set of feature quantities (identification feature quantities) indicated by the effective pattern EP from feature quantities CRi included in apparatus information 33 from the manufacturing line, compares the acquired feature quantities with the threshold values Th1, Th2 and Th3 of the learning data 28D, determines a corresponding cluster on the basis of the comparison results, searches the association table 90 on the basis of the determined cluster, associates the corresponding cluster Ci (i = 1, 2, 3) with a factor 92 corresponding thereto and outputs the associated cluster and factor (step S38). Accordingly, information (evaluation values 411 to 413) predicting a factor of a failure of the manufacturing line that is being operated can be obtained.

The failure prediction unit 40 searches an importance level table 80 on the basis of the cluster of the predicted failure (defect) and determines feedback methods for importance levels M1 to M3 (step S41). The importance levels M1, M2 and M3 indicate importance levels (priority order) of feedback methods for performing predictive maintenance of the manufacturing line.

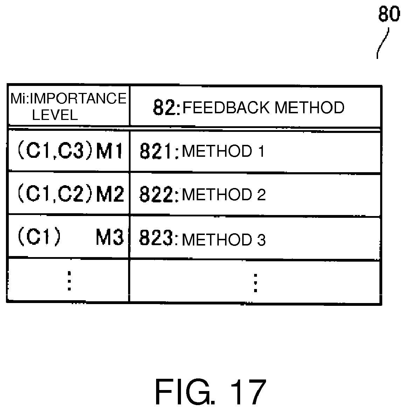

Referring to FIG. 17, feedback methods 82 are registered corresponding to importance levels Mi associated with clusters Ci of FIG. 16 in the importance level table 80. For example, when a result of prediction of failure (or defect) of the manufacturing line corresponds to cluster C1 (failure of the servo motor is predicted), all feedback methods 821 to 823 of the importance levels M1 to M3 of predictive maintenance are performed. When a result of prediction of failure of the manufacturing line corresponds to cluster C2 (defects in a material are predicted), only the feedback method 822 of the importance level M2 of predictive maintenance is performed because there is a case in which the process may stand by until the next lot depending on material type.

Meanwhile, feedback methods may include reporting modes of notification of factors and differentiate reporting modes for each factor. For example, feedback methods may include combinations of one or more of turning on an alarm lamp, transmission of a notification to the terminal 11 or the computer 300 of the administrator, recording to the log region E1 of the memory 112, suspension of the manufacturing line and the like, but the feedback methods are not limited to such methods.

The failure prediction unit 40 can associate results of prediction of failures (or defects) of the manufacturing line with factors (causes) of the failures and thus specify and notify factors of failures.

(Modified examples)

Although determination of a normal or abnormal state of the manufacturing line and determination of a feedback method are performed on the basis of a value obtained by applying a weight WT to the abnormality degree evaluation value 29 in the above-described embodiments, determination of predictive maintenance and determination of a feedback method may be performed on the basis of a normal or abnormal state according to the abnormality degree evaluation value 29 that is not weighted. In addition, determination of the weight WT based on both the completion information 31 and the failure rate information 41 of workpieces W, determination of the weight WT based on only the completion information 31 and determination of the weight WT based on only the failure rate information 41 (evaluation values 411, 412 and 413) may be switched.

Processing of each flowchart illustrated in the above-described embodiments is stored in a storage unit (the memory 112, the hard disk 114, the memory card 123 and the like) of the PLC 100 as a program. The CPU can realize the aforementioned functions for predictive maintenance by reading programs from the storage unit and executing the programs.

Such programs can be recorded in a computer-readable recording medium such as a flexible disk, a compact disk-read only memory (CD-ROM), a ROM, a RAM, and the memory card 123 included in the PLC 100 and provided as program products. Alternatively, programs can be provided by being recorded in a recording medium such as the hard disk 114 included in the PLC 100. In addition, programs can be provided by being downloaded from a network which is not shown via the communication interface 124.

[Reference Signs List]

1 System
5A, 5B Acceleration sensor
5C Encoder
5D Arm
11 Terminal
20 Information acquisition unit
21 Feature quantity acquisition unit
22 Feature quantity evaluation unit
23 Line evaluation unit
24 Abnormality processing unit
25 Post-processing unit
26 Raw data
27, CR1, CR2, CR3, CR4, CR5, CR6, CRi Feature quantity
28A, 28B, 28C, 28D, 281, 282, 283 Learning data
29 Abnormality degree evaluation value
30 Completion acquisition unit
31 Completion information
32 Compatibility determination unit
33 Apparatus information
34 Classification unit
37 Processed part group
38 Combination table
40 Failure prediction unit
41 Failure rate information
50 Learning unit
55 Roller
60 Servo motor
70 Packaging apparatus
71 Inspection device
72 Laser marker
73 Code reader
74 Processing apparatus

80 Importance level table
82 Feedback method
90 Association table
92 Factor
100 Programmable logic controller
110 Central processing unit
112 Memory
113 Timer
114 Hard disk
118 Input interface
120 Display controller
121 Keyboard
122 Display
123 Memory card
124 Communication interface
200 Unit
300 Computer
381 Combination
382 Compatibility
411, 412, 413 Evaluation value
821, 822, 823 Feedback method
921 Fault of servo motor
922 Defects in material
923 Fault of inspection apparatus
A, B Part
A1, A2, B1, B2 Processed part
BL1, BL2, BL3, BL Boundary line
C1, C2, C3, Ci Cluster
E1 Log region
E3, E4, E5 Region
EP Effective pattern
M1, M2, M3, Mi Importance level
S1, S3, S5, S7, S9, S11, S13, S15, S20, S23, S25, S27, S29, S30, S31, S33, S35, S37, S38, S39, S41, S111, S112, S113, S3a, S4a, S5a, S6a, S7a, S8a, S9a, S10a, S11a Step
W Workpiece
WT Weight

**Claims**

1. A management device (100) which manages a manufacturing line used to manufacture a target (W), comprising:

   a feature quantity acquisition unit (21) which acquires, from apparatus information (33) representing states of apparatuses included in the manufacturing line, a plurality of feature quantities (27) included in the apparatus information (33);
   a feature quantity evaluation unit (22) which compares the acquired feature quantities (27) with a plurality of feature quantities included in apparatus information (33) representing basic states of the apparatuses and determines states of the apparatuses;
   a completion acquisition unit (30) which acquires completion information (31) representing a completed state of the target (W); and
   an evaluation unit which compares a value obtained by applying a weight based on the completion information (31) to an output of the feature quantity evaluation unit (22) with a threshold value and evaluates a state of the manufacturing line based on a comparison result.

2. The management device (100) according to claim 1, wherein the completion information (31) indicates whether the target (W) satisfies a predetermined quality.

3. The management device (100) according to claim 1 or 2, wherein the completion acquisition unit (30) compares the feature quantities (27) acquired by the feature quantity acquisition unit (21) when the manufacturing line is operated with a plurality of previously learned feature quantities for a plurality of qualities of the target (W) and determines the completion information (31) based on a comparison result.

4.  The management device (100) according to any one of claims 1 to 3, further comprising:

    a failure rate acquisition unit (40) which acquires failure rate information (41) indicating a possibility of failure of the apparatuses or defects in a material of the target (W),
    wherein the weight is based on the completion information (31) and the failure rate information (41).

5.  The management device (100) according to claim 4, wherein the failure rate acquisition unit (40) compares the feature quantities (27) acquired by the feature quantity acquisition unit (21) when the manufacturing line is operated with a plurality of previously learned feature quantities for a plurality of factors (92) of failure and determines the failure rate information (41) based on a comparison result.

6.  The management device (100) according to claim 5, wherein the management device (100) reports notification of the possibility of failure in different modes for each factor (92) of failure.

7.  A non-transitory computer-readable medium, storing a management program for causing a computer to execute a method of managing a manufacturing line used to manufacture a target (W), comprising:

    acquiring, from apparatus information (33) representing states of apparatuses included in the manufacturing line, a plurality of feature quantities (27) included in the apparatus information (33);
    comparing the acquired feature quantities (27) with a plurality feature quantities included in apparatus information (33) representing basic states of the apparatuses and determining states of the apparatuses;
    acquiring completion information (31) representing a completed state of the target (W); and
    comparing a value obtained by applying a weight based on the completion information (31) to an output of a feature quantity evaluation unit (21) with a threshold value and evaluating a state of the manufacturing line based on a comparison result.

FIG. 1

FIG. 2

EP 3 373 211 A1

FIG. 3

FIG. 4

EP 3 373 211 A1

26

RAW DATA

TACT TIME

FRAME
SEGMENTATION
PROCESS

FRAME UNIT DATA

CALCULATE
FEATURE
QUANTITY

FEATURE QUANTITY ── 27

# FIG. 5

FEATURE QUANTITY (6 TYPES)

1.AVERAGE: CENTER OF DISTRIBUTION
2.STANDARD DEVIATION: DEGREE OF DEVIATION
FROM MEAN
3.MAXIMUM: UPPER LIMIT OF DISTRIBUTION
4.MINIMUM: LOWER LIMIT OF DISTRIBUTION

STANDARD DEVIATION

MINIMUM      MAXIMUM

MEAN

5.SKEWNESS: DEVIATION DEGREE

OF DISTRIBUTION

(LARGE) NEGATIVE                    POSITIVE (LARGE)

6.STEEPNESS: SHARPNESS

DEGREE OF DISTRIBUTION

(LARGE) NEGATIVE                    POSITIVE (LARGE)

# FIG. 6

START

S1

PRE-PROCESSING

FRAME ENDS

S3

REPEAT
UNTIL END OF
FRAME

FRAME CONTINUES

S5

ACQUIRE APPARATUS
INFORMATION

S7

OBTAIN FEATURE
QUANTITIES

S30

FAILURE
PREDICTION

S9

EVALUATE FEATURE
QUANTITIES USING MACHINE
LEARNING ALGORITHM

S20

COMPLETION
ACQUISITION

S11

NORMAL

EVALUATION PROCESS

ABNORMAL

S13

PROCESS AS
ABNORMALITY

S15

POST-
PROCESSING

END

FIG. 7

EVALUATION
PROCESS

ABNORMALITY
DEGREE EVALUATION
VALUE >FIRST
THRESHOLD VALUE? — S111

ABNORMAL
(YES) — TO S13

(NO) ≠ ABNORMAL — S112

WEIGHTING PROCESS

WEIGHTED
VALUE > SECOND THRESHOLD
VALUE? — S113

TO S3

TO S13

# FIG. 8

| 381:COMBINATION | 382:COMPATIBILITY |
|---|---|
| A1, (B1 or B2) | OK |
| A2, B1 | OK |
| OTHERS | NOT GOOD |

FIG. 9

EP 3 373 211 A1

START (LEARNING MODE)

S3a

ACQUIRE APPARATUS INFORMATION

S4a

ACQUIRE FEATURE QUANTITIES

S5a

ATTACH LABEL

S6a

ANALYSIS PROCESS

S7a

GENERATE COMBINATION PATTERN

S8a

CALCULATE IDENTIFICATION RATE OF
EACH PATTERN

S9a

DETERMINE EFFECTIVE PATTERN

S10a

ACQUIRE THRESHOLD VALUE

S11a

STORE EFFECTIVE PATTERN AND
THRESHOLD VALUE

END

# FIG. 10

E3

| COMBINATION PATTERN | IDENTIFICATION RATE |
|---|---|
| (CR1, CR2) | 0.9 |
| (CR1, CR3) | 0.88 |
| (CR1, CR2, CR3) | 0.79 |
| ⋮ | ⋮ |
| CR1 | 0.6 |
| ⋮ | ⋮ |
| (CR1, CR3, CR5···) | 0.1 |
| ⋮ | ⋮ |

E4

BL

CR2

CR1

FIG. 11

FIG. 12

FIG. 13

FIG. 14

X: FACTOR (1)
Y: FACTOR (2)
Z: FACTOR (3)

## FIG. 15

| Ci:CLUSTER | 92:FACTOR |
|---|---|
| C1 | 921: FAULT OF SERVO MOTOR |
| C2 | 922: DEFECTS IN MATERIAL |
| C3 | 923: FAULT OF INSPECTION APPARATUS |
| ⋮ | ⋮ |

## FIG. 16

80

| Mi:IMPORTANCE LEVEL | 82:FEEDBACK METHOD |
|---|---|
| (C1,C3) M1 | 821:METHOD 1 |
| (C1,C2) M2 | 822:METHOD 2 |
| (C1)　　M3 | 823:METHOD 3 |
| ⋮ | ⋮ |

# FIG. 17

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 106 948 A1 (OMRON TATEISI ELECTRONICS CO [JP]) 21 December 2016 (2016-12-21) * paragraphs [0008], [0009], [0021], [0022], [0031]; figures 1,7 * | 1-7 | INV. G06Q10/00 G06Q10/06 G05B19/418 |
| X | Mika Ruusunen ET AL: "Quality Monitoring and Fault Detection in an Automated Manufacturing System - a Soft Computing Approach", UNIVERSITY OF OULU CONTROL ENGINEERING LABORATORY, 1 May 2002 (2002-05-01), XP055457250, Retrieved from the Internet: URL:http://jultika.oulu.fi/files/isbn95142 75128.pdf [retrieved on 2018-03-07] * pages 1,4-6; figure 3 * | 1-7 | |

TECHNICAL FIELDS SEARCHED (IPC)

G06Q
G05B

The present search report has been drawn up for all claims

| Place of search | Date of completion of the search | Examiner |
|---|---|---|
| Munich | 7 March 2018 | Stratford, Colin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 1813

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2018

| Patent document cited in search report | | Publication date | Patent family member(s) | | Publication date |
|---|---|---|---|---|---|
| EP 3106948 | A1 | 21-12-2016 | CN | 105940354 A | 14-09-2016 |
| | | | EP | 3106948 A1 | 21-12-2016 |
| | | | JP | 6264072 B2 | 24-01-2018 |
| | | | JP | 2015152943 A | 24-08-2015 |
| | | | WO | 2015119232 A1 | 13-08-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004164635 A